# EUROPEAN PATENT SPECIFICATION

(11) **EP 4 446 202 B1**
(45) Date of publication and mention of the grant of the patent: **14.01.2026**
(21) Application number: 24169145.0
(22) Date of filing: 09.04.2024
(51) Int. Cl.: B62D 25/16

(54) **CAR WITH QUICK REPLACEMENT OF THE SPARK PLUGS**
KRAFTFAHRZEUG MIT SCHNELLAUSTAUSCH DER ZÜNDKERZEN
VOITURE AVEC REMPLACEMENT RAPIDE DES BOUGIES D'ALLUMAGE

(30) Priority: 13.04.2023 IT 202300007068
(43) Date of publication of application: 16.10.2024
(73) Proprietor: FERRARI S.p.A., 41100 Modena (IT)
(72) Inventor: FAVARETTO, Fabrizio, 41100 MODENA (IT)
(74) Representative: Studio Torta S.p.A.

(56) References cited:
- EP-A1- 0 808 765
- DE-A1- 102014 116 612
- JP-A- 2003 276 454

## Description

### CROSS-REFERENCE TO RELATED APPLICATIONS

This patent application claims priority from Italian patent application no. 102023000007068 filed on April 13, 2023.

### TECHNICAL FIELD

The present invention relates to a car.

### BACKGROUND

In particular, the present invention relates to a car of the type comprising a support frame defining at least part of a bottom floor of the car; a passenger compartment mounted on the support frame and projecting upwards from the bottom floor; and an engine for moving the car.

The engine is mounted in a rear area of the car, in particular parallel to a forward moving direction of the car, and is connected to two drive wheels mounted in respective housing compartments obtained in the support frame and delimited by respective back walls interposed between the drive wheels and the engine.

Each drive wheel is connected to the support frame by means of the interposition of a suspension.

The engine is provided with a plurality of cylinders associated with respective spark plugs projecting from the engine in the direction of the back walls of the housing compartments of the drive wheels, in particular crosswise to the forward moving direction of the car.

EP 0 808 765 A1 is exemplary of a car according to the preamble of independent claim 1.

The known cars of the type described above have several drawbacks mainly deriving from the fact that, due to the relatively reduced space between the engine and the back walls of the housing compartments of the drive wheels, the replacement of the spark plugs entails the removal of the entire engine and is thus relatively long, complex and expensive.

### SUMMARY

The object of the present invention is to provide a car which is exempt from the drawbacks described above and which is simple and cost-effective to manufacture.

According to the present invention, there is provided a car as claimed in the appended claims.

### BRIEF DESCRIPTION OF THE DRAWINGS

The present invention will now be described with reference to the accompanying drawings, which illustrate a non-limiting example embodiment thereof, wherein:
Figure 1 is a schematic perspective view, with parts removed for clarity, of a preferred embodiment of the car of the present invention;

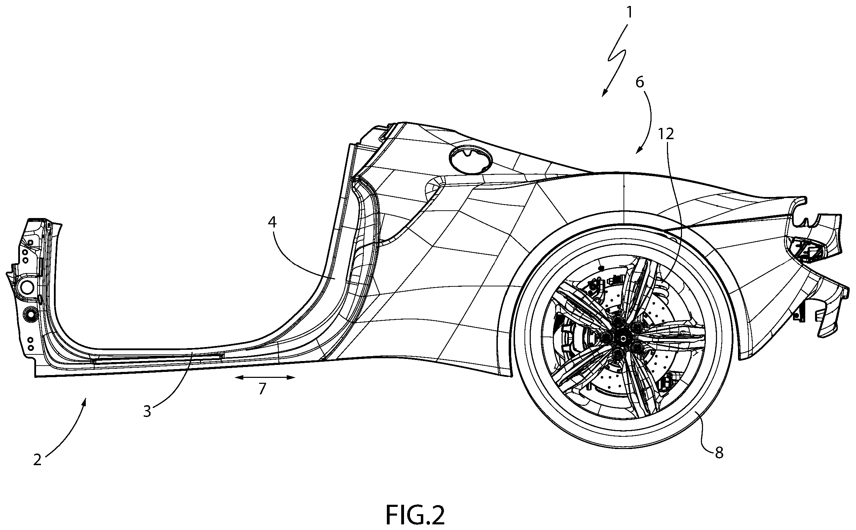

Figure 2 is a schematic side view, with parts removed for clarity, of a detail of the car of Figure 1;

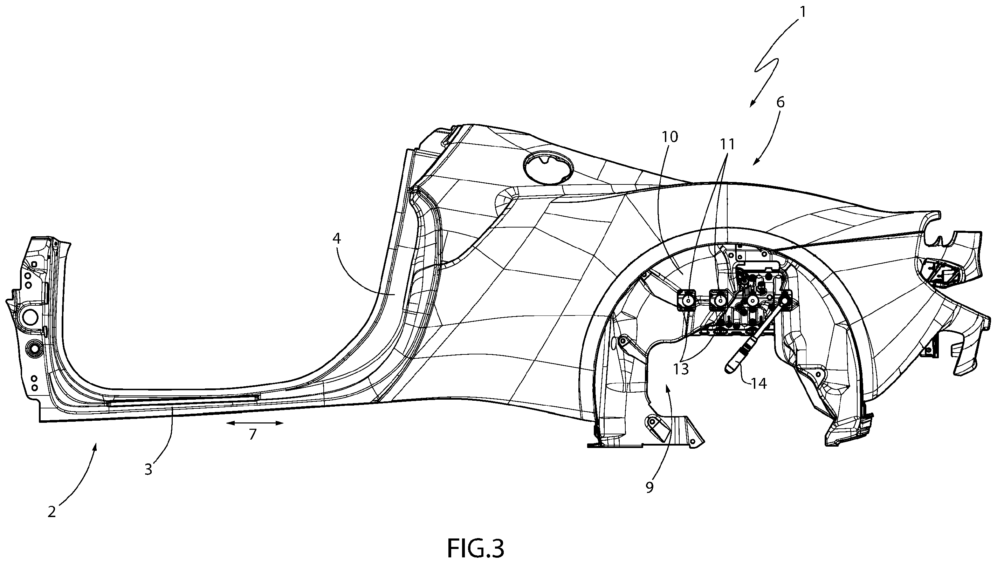

Figure 3 is a first schematic side view, with parts removed for clarity, of a detail of Figure 2; and

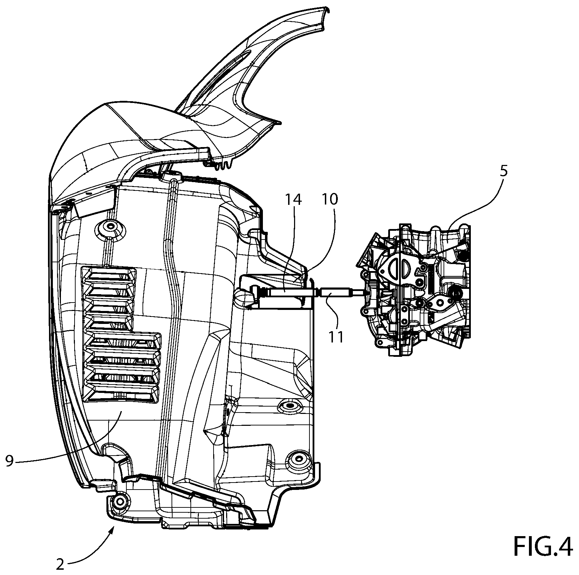

Figure 4 is a second schematic side view, with parts in section and parts removed for clarity, of the detail of Figure 3.

### DESCRIPTION OF EMBODIMENTS

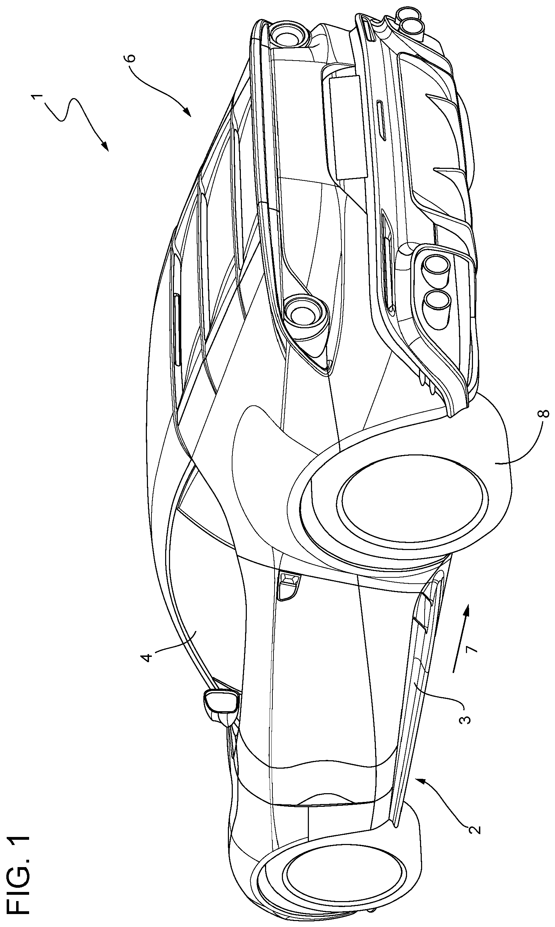

With reference to Figure 1, reference numeral 1 indicates, as a whole, a car, in particular a sports car, comprising a support frame 2 defining at least part of a bottom floor 3 of the car 1, and a passenger compartment 4 mounted on the frame 2 and projecting upwards from the floor 3.

The car 1 further comprises an engine 5 of known type, which is mounted in the centre of a rear area 6 of the frame 2, in particular parallel to a forward moving direction 7 of the car 1, and is connected in a known manner to two rear drive wheels 8 of the car 1.

The frame 2 is configured to define two housing compartments 9, each of which houses on the inside a relative wheel 8, and is delimited by a back wall 10 interposed between the wheel 8 and the engine 5.

The engine 5 has a plurality of cylinders, known and not shown, provided with respective spark plugs 11 projecting from the engine 5 in the direction of the back walls 10 of the housing compartments 9, in particular crosswise to the direction 7.

Each wheel 8 is connected to the frame 2 by means of the interposition of a suspension 12, which extends through the relative compartment 9, and is interposed between the wall 10 of the relative compartment 9 and the wheel 8.

The wall 10 of each compartment 9 has, for each spark plug 11, a respective opening 13 substantially facing the spark plug 11 crosswise to the direction 7.

In this case, the openings 13 of the wall 10 of each compartment 9 are made so that they result to be accessible by the personnel in charge by simply removing the relative wheel 8 and the relative suspension 12.

The removal of the wheel 8 and of the suspension 12 allows the personnel in charge to access the openings 13, to remove the spark plugs 11 from the engine 5 by means of a tool 14 adapted to engage each spark plug 11 through the relative opening 13, and to mount new spark plugs 11 on the engine 5 by inserting each spark plug 11 and the tool 14 through the relative opening 13.

According to a variation not shown, the openings 13 of the wall 10 of each compartment 9 are made so that they result to be accessible by the personnel in charge by simply removing the relative wheel 8.

According to a further variation not illustrated, the number of openings 13 is different from the number of spark plugs 11 and each opening 13 allows accessing at least two spark plugs 11.

The car 1 has several advantages mainly deriving from the fact that the replacement of the spark plugs 11 does not entail the removal of the entire engine 5, but only of the drive wheels 8 or of the drive wheels 8 and of the relative suspensions 12.

## Claims

1. A car comprising an engine (5) to move the car; a plurality of spark plugs (11) mounted on the engine (5); two drive wheels (8) connected to the engine (5); a support frame (2) defining a pair of housing compartments (9) for the drive wheels (8); each housing compartment (9) being delimited by a back wall (10) facing at least part of the spark plugs (11) of the engine (5); and **characterized in that** the back wall (10) of each housing compartment (9) is provided with at least one opening (13) configured to allow a tool (14) to remove at least one spark plug (11) from the engine (5) and to allow at least one spark plug (11) to be mounted on the engine (5).

2. The car according to claim 1, wherein each opening (13) is configured to allow the tool (14) to remove a spark plug (11) from the engine (5) and to allow a spark plug (11) to be mounted on the engine (5).

3. The car according to claim 1 or 2 and further comprising, for each drive wheel (8), a respective suspension (12) interposed between the support frame (2) and the drive wheel (8).

4. The car according to claim 3, wherein the openings (13) of the back wall (10) of each housing compartment (9) are arranged so that they can be accessed by the tool (14) after having removed only the relative drive wheel (8) from the housing compartment (9).

5. The car according to claim 3, wherein the openings (13) of the back wall (10) of each housing compartment (9) are arranged so that they can be accessed by the tool (14) after having removed the relative drive wheel (8) and the relative suspension (12) from the housing compartment (9).

6. The car according to any one of the preceding claims, wherein the engine (5) is mounted in a rear area (6) of the car, in particular parallel to a forward moving direction (7) of the car.

7. The car according to any one of the preceding claims, wherein the spark plugs (11) project from the engine (5) in the direction of the back walls (10) of the housing compartments (9) of the drive wheels (8), in particular crosswise to a forward moving direction (7) of the car.

## Patentansprüche

1. Fahrzeug mit einem Motor (5) zum Bewegen des Fahrzeugs; einer Vielzahl von Zündkerzen (11), die an dem Motor (5) montiert sind; zwei Antriebsrädern (8), die mit dem Motor (5) verbunden sind; einem Tragrahmen (2), der ein Paar von Aufnahmeräumen (9) für die Antriebsräder (8) definiert; wobei jeder Aufnahmeraum (9) durch eine Rückwand (10) begrenzt ist, die mindestens einem Teil der Zündkerzen (11) des Motors (5) zugewandt ist; und **dadurch gekennzeichnet, dass** die Rückwand (10) jedes Aufnahmeraums (9) mit mindestens einer Öffnung (13) versehen ist, die konfiguriert ist, um einem Werkzeug (14) zu ermöglichen, mindestens eine Zündkerze (11) aus dem Motor (5) zu entfernen, und um zu ermöglichen, dass mindestens eine Zündkerze (11) an dem Motor (5) montiert wird.

2. Fahrzeug nach Anspruch 1, wobei jede Öffnung (13) dazu konfiguriert ist, es dem Werkzeug (14) zu ermöglichen, eine Zündkerze (11) aus dem Motor (5) zu entfernen und es einer Zündkerze (11) zu ermöglichen, an dem Motor (5) montiert zu werden.

3. Fahrzeug nach Anspruch 1 oder 2 und ferner umfassend für jedes Antriebsrad (8) eine jeweilige Aufhängung (12), die zwischen dem Tragrahmen (2) und dem Antriebsrad (8) angeordnet ist.

4. Fahrzeug nach Anspruch 3, wobei die Öffnungen (13) der Rückwand (10) jedes Aufnahmeraums (9) so angeordnet sind, dass sie für das Werkzeug (14) zugänglich sind, nachdem nur das relative Antriebsrad (8) aus dem Aufnahmeraum (9) entfernt wurde.

5. Fahrzeug nach Anspruch 3, wobei die Öffnungen (13) der Rückwand (10) jedes Aufnahmeraums (9) so angeordnet sind, dass sie nach Entfernen des relativen Antriebsrads (8) und der relativen Aufhängung (12) aus dem Aufnahmeraum (9) für das Werkzeug (14) zugänglich sind.

6. Fahrzeug nach einem der vorhergehenden Ansprüche, wobei der Motor (5) in einem hinteren Bereich (6) des Fahrzeugs, insbesondere parallel zu einer Vorwärtsfahrtrichtung (7) des Fahrzeugs, montiert ist.

7. Fahrzeug nach einem der vorhergehenden Ansprüche, wobei die Zündkerzen (11) vom Motor (5) in Richtung der Rückwände (10) der Aufnahmeräume (9) der Antriebsräder (8), insbesondere quer zu einer Vorwärtsfahrtrichtung (7) des Fahrzeugs, vorstehen.

## Revendications

1. Voiture comprenant un moteur (5) pour déplacer la voiture ; une pluralité de bougies d'allumage (11) montées sur le moteur (5) ; deux roues motrices (8) reliées au moteur (5) ; un cadre de support (2) définissant une paire de compartiments de logement (9) pour les roues motrices (8) ; chaque compartiment de logement (9) étant délimité par une paroi arrière (10) faisant face à au moins une partie des bougies d'allumage (11) du moteur (5) ; et **caractérisée en ce que** la paroi arrière (10) de chaque compartiment de logement (9) est pourvue d'au moins une ouverture (13) configurée pour permettre à un outil (14) de retirer au moins une bougie d'allumage (11) du moteur (5) et pour permettre à au moins une bougie d'allumage (11) d'être montée sur le moteur (5).

2. Voiture selon la revendication 1, chaque ouverture (13) étant configurée pour permettre à l'outil (14) de retirer une bougie d'allumage (11) du moteur (5) et pour permettre à une bougie d'allumage (11) d'être montée sur le moteur (5).

3. Voiture selon la revendication 1 ou 2 et comprenant en outre, pour chaque roue motrice (8), une suspension (12) respective interposée entre le cadre de support (2) et la roue motrice (8).

4. Voiture selon la revendication 3, les ouvertures (13) de la paroi arrière (10) de chaque compartiment de logement (9) étant disposées de manière à ce que l'outil (14) puisse y accéder après avoir retiré uniquement la roue motrice (8) relative du compartiment de logement (9).

5. Voiture selon la revendication 3, les ouvertures (13) de la paroi arrière (10) de chaque compartiment de logement (9) étant disposées de manière à ce que l'outil (14) puisse y accéder après avoir retiré la roue motrice (8) relative et la suspension (12) relative du compartiment de logement (9) .

6. Voiture selon l'une quelconque des revendications précédentes, le moteur (5) étant monté dans une zone arrière (6) de la voiture, en particulier parallèlement à une direction de déplacement vers l'avant (7) de la voiture.

7. Voiture selon l'une quelconque des revendications précédentes, les bougies d'allumage (11) faisant saillie à partir du moteur (5) dans la direction des parois arrière (10) des compartiments de logement (9) des roues motrices (8), en particulier transversalement à une direction de déplacement vers l'avant (7) de la voiture.
